# EUROPÄISCHE PATENTANMELDUNG

(11) **EP 2 385 180 A2**
(43) Veröffentlichungstag der Anmeldung: **09.11.2011**
(21) Anmeldenummer: 11164794.7
(22) Anmeldetag: 04.05.2011
(51) Int. Cl.: E04B 1/76

(54) **Ausbildung und Anordnung von Isolierplatten für Fassaden, Decken, Wände oder Dächer**

(30) Priorität: 07.05.2010 DE 202010005403 U
(71) Anmelder: Friedrich, Jessica, 95233 Helmbrechts (DE); Friedrich, Mark, 95233 Helmbrechts (DE); Friedrich, Matthias E., 95233 Helmbrechts (DE)
(72) Erfinder: Friedrich, Jessica, 95233 Helmbrechts (DE); Friedrich, Mark, 95233 Helmbrechts (DE); Friedrich, Matthias E., 95233 Helmbrechts (DE)
(74) Vertreter: Pröll, Jürgen

(57) **Zusammenfassung**

Die Erfindung betrifft eine Ausbildung und Anordnung von Isolierplatten für Fassaden, Wände, Decken oder Dächer, welche Isolier- oder Dämmplatten mittels Dämmplattenanker annagelbar oder anschraubbar und so ausgebildet sind, dass sie bei durchgehenden Innen- und Außenflächen überlappend, stumpf oder durch Nut-Feder-Verbindungen aneinander stoßend verlegbar sind, und in welche Isolier- oder Dämmplatten mindestens je ein Vakuumpaneel eingebettet ist. Zum leichten Einsetzen des Vakuumpaneels weist die Isolier- oder Dämmplatte mindestens eine flächige Aufnahmeausnehmung oder mindestens einen durchgehenden oder taschenförmigen Hohlraum zur Aufnahme des Vakuumpaneels auf, wobei die Öffnungsweite der Aufnahme oder des Hohlraums so gewählt ist, dass das Vakuumpaneel mindestens selbsthaltend einschiebbar ist.

## Beschreibung

Die Erfindung betrifft die Ausbildung und Anordnung von Isolierplatten für Fassaden, Decken, Wände oder Dächer mit den im Oberbegriff des Patentanspruches 1 genannten Merkmalen.

Aus der DE 20 2008 012 122 U1 ist ein Wärmedämmsystem mit Vakuumisolationspaneelen in Sandwichbauweise bekannt, bei dem die Vakuumisolationspaneele mit zwei Hartschaumplatten zu einem Sandwich verklebt sind, wobei eine Platte zur Aufnahme von Befestigungselementen an zwei gegenüberliegenden Seiten übersteht. Durch Einsatz von zusätzlichen Fugenelementen werden Wärmebrücken verhindert, welche nachträglich in die Zwischenräume zwischen den Hartschaumplatten mit Befestigungselementen eingesetzt werden. Die Verklebung ist nur mittels Vorrichtungen oder in einer Herstellungsfabrik möglich.

Aus der US 2008/0124511 A1 sind Fasermatten bekannt, bei deren Herstellung Vakuumisolationspaneele mit eingearbeitet werden. Solche wärme- und schalldämmenden Platten können dann in Hohlräumen einer Wand oder Decke oder eines Daches verlegt werden. Sie sind für eine Verlegung außenseitig nicht geeignet.

Aus der EP 1 566 264 A1 ist ein Wärmedämmkörper in Form einer Wärmedämmplatte zur Isolierung von Bauwerken bekannt, in der Vakuumpaneele in Form von Formlingen eingebettet sind. Die vollständige Einbettung erfolgt bevorzugt im Einschäumverfahren. Die so gefertigten Isolierplatten können dann im Verbund verlegt werden. Auch hier erfolgt eine Fertigung in der Fabrik.

Aus der DE 20 2006 016 523 U1 ist es bei einem Dachsystem für Gebäude mit in einem bestimmten Dachschrägenwinkel angeordneten Sparren aus Holz und eingefügten Betonschichten als Trageelement bekannt, auf die Betonschichten Isolierplatten, die aus geschäumtem Kunststoff, vorzugsweise aus expandiertem Polystyrol (PS) bestehen, aufzulegen. Die Isolierschichten sind in der Seitenansicht im Wesentlichen rautenförmig ausgebildet und mit Vorsprüngen versehen, die der Oberflächenform der Betonschicht entsprechend ausgebildet sind und an der Oberseite Vorsprünge und Stützerhebungen für die Verankerung und Unterstützung der auflegbaren Ziegeln aufweisen. In einer anderen Ausführungsform bestehen die Isolierplatten aus geschäumtem Kunststoff und sind großflächig ausgebildet und werden ebenfalls mittels Schrauben oder Nägel mit großen Scheiben an der Betonschicht oder einem Sparren gehalten. Die Platten sind mit Nutfederverbindungen versehen, so dass sie ohne Kältebrückenbildung miteinander verbindbar sind.

Solche Isolierplatten können selbstverständlich auch als Fassadendämmplatten verwendet werden. Diese werden dann auf ein Mauerwerk aufgeklebt und/oder mit den beschriebenen mechanischen Mitteln befestigt. Die Vorderseite dient als Fläche zum Aufbringen z. B. eines Putzes. Alle diese Platten werden üblicherweise mittels Dämmplattenanker mindestens zusätzlich befestigt. Dies sind großflächige Scheiben, die zentrisch einen Nagel oder eine Schraube aufweisen, die entweder in das Mauerwerk genagelt oder in einen Dübel im Mauerwerk eingeschraubt werden. Dabei werden die Nägel oder Schrauben in die Zwischenfugen zweier benachbarter Platten eingesetzt. Bei einfach oder zweifach überlappend angeordneten Isolierplatten können dabei die Dämmplattenanker so angebracht sein, dass sie vollständig von den überlappenden Isolierplatten verdeckt sind.

Soweit von durchgehenden Innen- und Außenflächen im Rahmen der Erfindung gesprochen wird, so ist darunter auch jede Oberfläche mit einer Struktur zu verstehen, die von einer glatten durchgehenden Oberfläche abweicht. Beispielsweise können an der Außenseite leistenförmige Vorsprünge angeformt sein, auf die Ziegeln mit den vorstehenden Befestigungsnasen auflegbar sind. Im Falle, dass die Isolierplatten als Fassadenplatten verwendet werden, können auch diese definierte Strukturen aufweisen oder eine glatte Fläche aufweisen, so dass darauf beispielsweise ein Putz aufbringbar ist. Zum sicheren Halten werden derartige Platten stets mit den angegebenen Dämmplattenankern an dem Mauerwerk oder an der Dachkonstruktion befestigt.

Mit den aus geschäumtem Kunststoff bestehenden Isolierplatten ist eine hohe Wärmedämmung erzielbar. Um eine besonders gute Wärmedämmung zu erreichen, werden dabei Platten in Stärken z. B. von ca. 8 cm bis ca. 15 cm verwendet. Diese tragen auf ein Mauerwerk oder eine Dachkonstruktion auf und erhöhen damit die Dicke des Mauerwerkes. Es ist bekannt, anstelle solcher Isolierplatten Vakuumdämmplatten anzubringen, die wesentlich höhere Isoliereigenschaften aufweisen. Hierbei handelt es sich ebenfalls um geschäumte Kunststoffplatten, die allerdings in eine luftundurchlässige Folie eingeschweißt sind und denen die Luft durch eine Vakuumpumpe entzogen ist.

Aus der DE 10 2004 028 227 A1 ist eine Anordnung zur Befestigung von Vakuumdämmplatten an Baukörpern und die Vakuumplatte als solche zur Dämmung von Häuserfassaden, Dächern und ähnlichen Flächen von Gebäudehüllen, aber auch in Gebäuden an Wänden und Decken bekannt, die wegen der hervorragenden Dämmwerte bei geringem Volumen eingesetzt werden können. Beispielsweise weist eine 2 cm dicke Vakuumplatte den gleichen Dämmwert wie eine 20 cm dicke Styroporplatte auf. Nachteilig ist bei der Anbringung dieser Bauelemente, dass eine zerstörungsfreie Befestigung von Vakuumdämmplatten mit herkömmlichen Methoden nicht oder nur mit hohem Aufwand möglich ist. Die Vakuumdämmplatten sind darüber hinaus erheblich kostenaufwendiger als herkömmliche Dämmstoffe herstellbar. Zur Senkung des Gesamtkostenaufwandes ist in der Schrift eine spezielle Verbindungstechnologie für derartige Vakuumdämmplatten angegeben. Bei der Verarbeitung derartiger Vakuumplatten unter Verwendung von Dämmplattenankern kann es dennoch zu Beschädigungen der die Platte umgebenden Folie kommen, die das Vakuum sicherstellt. Im Falle, dass Luft in die hermetisch abgedichtete, aus geschäumtem Kunststoff bestehende Vakuumplatte eindringen kann, geht die erhöhte Isolierwirkung verloren. Ein weiterer Nachteil ist dadurch gegeben, dass die Folienoberfläche glatt und z. B. nicht für einen Putzauftrag geeignet ist.

Bei den eingangs beschriebenen Verbundplatten mit Vakuumpaneelen ist der Nachteil gegeben, dass diese in einer Fabrik vorgefertigt und dann als Ballen- oder Stapelware zum Ort des Verbauens verschickt werden. Da ein besonderer Schutzhinweis oft fehlt und an einer Baustelle die Umverpackung, z. B. Folie, entfernt wird, ist für den Handwerker nicht ersichtlich, um welche Isolierplattenausführungen es sich handelt, so dass Vernagelungen im Bereich der Vakuumpaneele oder sonstige Beschädigungen der Isolierplatte im Bereich der nicht sichtbaren Vakuumpaneele nicht auszuschließen sind. Wenn die Schutzfolie der Vakuumpaneele durchlöchert ist, ist die beschriebene erhöhte Isolierwirkung nicht mehr gegeben.

Ausgehend vom Stand der Technik liegt der Erfindung deshalb die Aufgabe zugrunde, eine Lösung anzugeben, die es dem Fachmann ermöglicht, am Ort des Verbauens die Vakuumdämmplatten bzw. Vakuumpaneele erst in die Isolierplatten wahlweise einzusetzen und die Isolierplatten so auszugestalten, dass eine Beschädigung der eingesetzten Vakuumpaneele ausgeschlossen und die Befestigung mittels Dämmplattenankern möglich ist und die bewehrte Oberflächenstruktur einer herkömmlichen Isolierplatte beibehalten wird.

Die Aufgabe löst die Erfindung durch Ausbildung der Isolierplatte und deren Anordnung gemäß der im Anspruch 1 angegebenen technischen Lehre, wonach die Isolier- oder Dämmplatte mindestens eine flächige Aufnahmeausnehmung oder mindestens einen durchgehenden oder taschenförmigen Hohlraum zur Aufnahme eines Vakuumpaneels aufweist, wobei die Öffnungsweite der Aufnahme oder des Hohlraums so gewählt ist, dass das Vakuumpaneel selbsthaltend einlegoder einschiebbar ist.

Es ist ersichtlich, dass durch die Erfindung die Isolierplatte als solche völlig unabhängig von dem Vakuumpaneel hergestellt, verpackt und an eine Baustelle angeliefert werden kann. Der Bauherr hat es auch noch in der Hand, zu bestimmen, ob diese Isolierplatten durch Einlegeisolierplatten anderer Bauart und/oder aus gleichem Material in die vorgesehenen Aufnahmeausnehmungen und Hohlräume eingesetzt werden oder die wesentlich teureren Vakuumpaneele. Die Vakuumpaneele werden als Stapel oder Ballenware in Umverpackungen, z. B. Schrumpffolie, verpackt ebenfalls an die Baustelle geliefert. Auf Grund der Struktur dieser Vakuumpaneele ist es für den Handwerker sofort ersichtlich, dass die umgebenden Folien nicht beschädigt werden dürfen. Er wird also nach Entfernen der Umverpackung die Vakuumpaneele in die vorgesehenen Aufnahmeausnehmungen oder Hohlräume einsetzen, ohne dass diese beschädigt werden. Durch die Markierung von Befestigungspunkten für Dämmplattenanker werden die Isolierplatten in herkömmlicher Art an Dachlatten auf dem Dach oder an geschlossenen Dachflächen oder an einer senkrechten oder schrägen Wand befestigt. Durch die Art der Ausbildung der Aufnahmeausnehmung ist ein selbstklemmender Sitz des Vakuumpaneels gewährleistet, ebenso in einem durchgehenden oder taschenförmigen Hohlraum. Es braucht also keine zusätzliche Verklebung erfolgen, die ohnehin in einem schlitzförmigen Hohlraum nicht möglich wäre.

Vorteilhafte Ausgestaltungen der Erfindung sind in den Unteransprüchen im Detail angegeben.

Soweit bezüglich der Erfindung von Isolierplatte die Rede ist, so handelt es sich hierbei um eine Wärmedämmplatte, die auch akustische Dämmeigenschaften aufweisen kann. Soweit die Rede von Dämmplatten ist, so kann es sich dabei um eine akustische Dämmplatte handeln, die auch Wärmedämmeigenschaften hat. Solche Isolier- und Dämmplatten werden aus den verschiedensten Materialien hergestellt und für die Isolierung von Decken, Dächern oder Wänden, insbesondere Außenwänden von Bauten verwendet. Als Materialien kommen z. B. in Betracht Zellulose, geschäumte Kunststoffe, wie Polyurethan (PU), expandiertes Polystyrol (PS), verpressbare Stein- oder Glaswolle, Holzfasern oder andere Werkstoffe oder Werkstoffkombinationen. Diese Platten werden aneinanderstoßend in einem Verbund verlegt, wobei möglichst durchgehende Stoßkanten vermieden werden. Andere Platten weisen Nutfederverbindungen auf, die ineinandergeschoben werden. Die Platten können aber auch als Formplatten ausgebildet sein und aneinandergereiht werden, wobei die Reihen jeweils um einen Teilungsfaktor, bezogen auf die Breite einer Platte, versetzt verlegt werden, so dass durch die Überlappung ein kältebrückenfreier Verbund gegeben ist. Soweit im Nachfolgenden Dämm- oder Isolierplatten angegeben sind, so fallen alle Plattenarten hierunter, ebenso deren Einsatzgebiete.

Soweit die Erfindung Vakuumpaneele nennt, so handelt es sich dabei um Isolierplatten, die ebenfalls aus Zellulose, geschäumten Kunststoffen, wie Polyurethan (PU), expandiertem Polystyrol (PS), verpressbarer Stein- oder Glaswolle, Holzfasern oder anderen Werkstoffen oder Werkstoffkombinationen bestehen können. Sie können aber auch aus Mineralstoffen, z. B. Kieselerde, oder anderen Stoffen gefertigt sein. Das poröse Material wird in eine Kunststofffolie eingeschweißt und vakuumiert, wobei sich bei geringer Bauhöhe wesentlich bessere Isoliereigenschaften ergeben als bei herkömmlichen Isolier- und Dämmplatten.

Die einzelnen herkömmlichen Isolierplatten werden nach der Erfindung also zusätzlich mit mindestens einer Vakuumdämmplatte ausgerüstet, wobei der die Vakuumdämmplatte umgebende Rahmen zwar die Gesamtisolierwirkung etwas verringert, was aber durch die Überlappungen ausgeglichen wird, sofern die Isolierplatten im Verbund verlegbar sind und die nächstfolgende Isolierplatte mit dem Vakuumpaneel den Rahmen übergreift. Auch können in einem Dreierverbund in zwei Ausnehmungen Vakuumdämmplatten bzw. -paneele eingelegt sein, was eine wesentliche Verbesserung der Isolierwirkung bewirkt. Die herkömmliche Isolierplatte wird also mit mindestens einer Aufnahmeausnehmung oder mit einem durchgehenden oder taschenförmigen Hohlraum zur Aufnahme eines Vakuumpaneels versehen, das darin eingeklemmt oder eingeschoben wird. Die Öffnungsweite der Aufnahme oder des Hohlraumes ist dabei so gewählt, dass das Vakuumpaneel selbsthaltend einlegbar oder einschiebbar ist, so dass auf einfache Weise dieser Verbund auch am Verarbeitungsort auf der Baustelle herstellbar ist. Eine so bestückte Isolierplatte kann in herkömmlicher Weise gestapelt und auch durch einfaches Abnehmen in gewohnter Weise im Verbund verbaut werden. Die Platten werden dabei auch in bekannter Weise zusätzlich oder allein über Dämmplattenanker an einer Wand oder an einer Dachkonstruktion befestigt, wobei die Nägel oder die Schrauben des Dämmplattenankers in die Fugen zwischen zwei benachbarte Platten in bekannter Weise eingesetzt werden.

Für die Platzierung der Dämmplattenanker ist eine Markierung auf der Sichtseite der Isolierplatte von Vorteil. Dies kann eine Kreuz- oder eine Kreismarkierung oder eine andere sichtbare Markierung sein.

Wenn die Platten so ausgebildet sind, dass sie einfach überdeckend angeordnet sind, so kann der jeweilige Dämmplattenanker so angebracht werden, dass er von der nächstfolgenden Dämmplatte zumindest im Falzbereich, dies kann beispielsweise ein Stufenfalz oder ein Schrägfalz mit in etwa rautenförmiger Seitenausprägung sein, verdeckt wird. Im Falle, dass eine zweifache Überdeckung gegeben ist, kann die Befestigung mittels Dämmplattenanker im gesamten Überlappungsbereich erfolgen. Durch die Vorgaben der Dämmplattenumrisse ist dabei sichergestellt, dass die Schraube oder der Nagel des Dämmplattenankers zu keinem Zeitpunkt das geschützte integrierte Vakuumpaneel beschädigen kann.

Die Isolierplatte kann aus einem geschäumten Kunststoff bestehen und eine Dämmplatte damit bilden. Diese kann, wie eingangs schon ausgeführt, eine glatte Oberflächenstruktur aufweisen, um im Verbund eine glatte Oberfläche und auch eine glatte Anlagefläche zu ermöglichen. Es können aber auch an den beiden Außenseiten Profile angeformt sein, um z. B. Teile oder Dachziegeln hieran anbringen zu können.

Die Aufnahmeausnehmung kann beispielsweise an der Rückseite der Platte vorgesehen sein. Sie ist so dimensioniert, dass das Vakuumpaneel, das in einer Schutzhülle vakuumdicht eingebettet ist, in die Ausnehmung eingedrückt werden kann. Dazu können die Seitenflächen der Ausnehmung beispielsweise mindestens im Außenbereich wulstförmige Ansätze aufweisen, die eventuell - bei entsprechender Tiefenausbildung der Platte - den Rand des Vakuumpaneels übergreifen. Durch die Elastizität des Isoliermaterials, z. B. expandiertes Polystyrol, kann aber auch eine unmittelbare Einklemmung erfolgen.

Im Falle, dass von oben zugängliche Einführschlitze mit einem daran sich anschließenden Hohlraum in die Isolierplatte eingearbeitet sind, kann das Vakuumpaneel auch von oben eingeschoben werden. Der Einschubweg kann durch eine quer verlaufende Materialschicht der Isolierplatte begrenzt werden. Wenn der Hohlraum durchgehend vorgesehen ist, können auch mehrere Vakuumpaneele von oben durchgehend eingeschoben werden, wenn kein seitlicher Verbund vorgesehen ist. Es können auch überlange Vakuumpaneele eingeschoben werden, die zwei oder drei Isolierplatten überbrücken. Das Gleiche gilt auch bei seitlicher Anordnung der Einführschlitze. Der Hohlraum wird durch eine dünnere Unter- und eine dünnere Oberplatte gebildet, die Bestandteil der Isolierplatte sind. Auch können die Hohlräume durch Einschub einer in der Stärke im Schlitz angepasste Isolierplatte begrenzt werden, die als Rahmenteil das eingesetzte Paneel abschließt. Ein solcher Einsatz oder Materialstreifen kann auch als Federstreifen in den Schlitz der benachbarten Isolierplatte mit eingeschoben werden. Dadurch entsteht in gewünschter Weise immer ein Randbereich, der von der nächsten Isolierplatte überdeckt wird oder Bestandteil der Stoßfuge ist.

Die Erfindung wird nachfolgend anhand der in den Zeichnungen dargestellten Ausführungsbeispiele ergänzend erläutert.

In den Zeichnungen zeigen:
- FIG 1: In einer schematischen Darstellung eine Seitenansicht einer erfindungsgemäß ausgebildeten Fassadendämmplatte, die im Verbund verlegt ist, und zwar einfach überdeckend,
- FIG 2: eine Vorderansicht auf einen Teilverbund,
- FIG 3: ein weiteres Ausführungsbeispiel einer einfach überdeckenden Anordnung von Dämmplatten an einer Wand, wobei die Dämmplatten einen Stufenfalz aufweisen, und
- FIG 4: eine zweifach überdeckende Fassadendämmplatte, die im Verbund an einer Wand verlegt und daran befestigt ist.

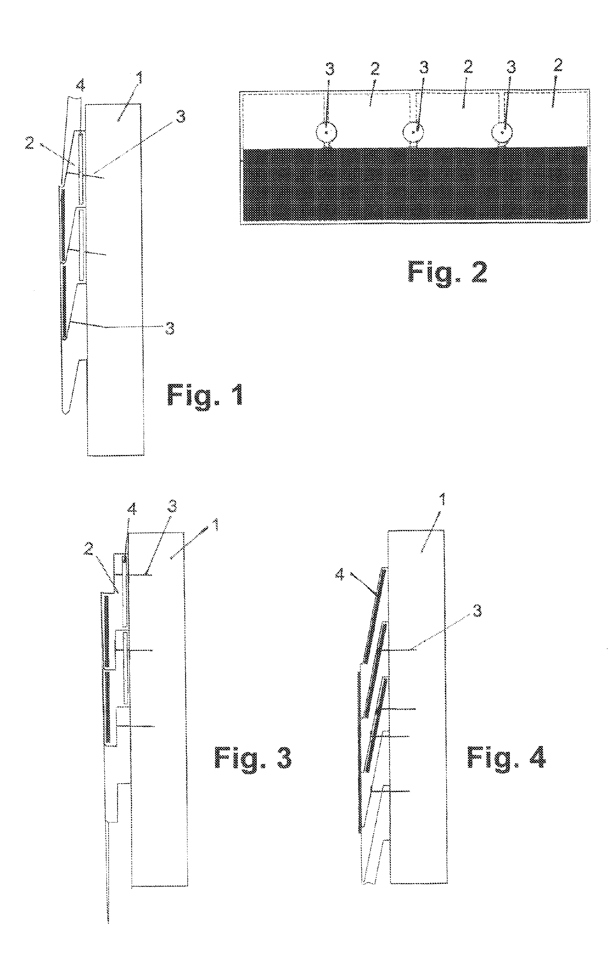

In Figur 1 ist eine Wand 1 schematisch eingezeichnet. Au-βenseitig ist auf dieser Wand eine Dämmplatte 2, nämlich eine Isolierplatte angebracht, die eine im Wesentlichen rautenförmige Seitenstruktur aufweist und mittels eines Dämmplattenankers 3 befestigt ist. Diese Dämmplatten 2 sind im einfach überdeckenden Verbund so verlegt, dass in die Spalte zu den benachbarten Dämmplatten keine Feuchtigkeit hindurchdringen kann. Die äußere Struktur ist insbesondere bei der letzten eingezeichneten unteren Dämmplatte ersichtlich. Sie werden aufeinander gesetzt, jedoch seitlich jeweils um ein halbes Teilungsmaß versetzt, so dass durch die Überlappungen sichergestellt ist, dass keine Kältebrücken entstehen. Dies ist aus Figur 2 im Wesentlichen ersichtlich. Das schwarze Feld zeigt, dass in den nebeneinander liegenden Dämmplatten 2 eine durchgehende Aufnahme vorgesehen ist, in die eine Isolierplatte gleicher Art oder aus anderem Werkstoff eindrückbar ist oder aber auch ein durchgehendes Vakuumpaneel. Auch dies zeigt, dass am Ort des Verbauens erst darüber entschieden werden kann, welche Isolierungsart gewünscht ist. Die Figur 2 zeigt auch, dass zwischen den einzelnen Dämmplatten 2 jeweils die Nägel oder Schrauben der Dämmplattenanker 3 angeordnet sind. Wenn nun die nächstfolgende Dämmplatte 2 aufgelegt wird, und zwar versetzt aufgelegt wird, so werden nicht nur die überstehenden Plattenteile der vorhergehenden Platte sondern auch die Dämmplattenanker 3 verdeckt.

Erfindungswesentlich ist nun, dass in der Rückseite einer jeden Dämmplatte 2 eine Aufnahme eingearbeitet ist. Diese kann beispielsweise beim Schäumungsprozess freigehalten werden. In diese Aufnahme ist nun erfindungsgemäß ein Vakuumpaneel 4 eingelegt. Da eine entsprechende Dimensionierung vorgesehen ist, kann das Vakuumpaneel 4 oder auch eine andere Isolierplatte gleicher Größe erst am Ort des Verbauens eingesetzt werden. Dies hat den Vorteil, dass die Isolierplatten 2 und das Vakuumpaneel 4 in völlig getrennten Gebinden angeliefert werden können und dann wahlweise am Ort des Verbauens erst eine Bestückung erfolgen kann. Das Vakuumpaneel 4 weist, wie eingangs schon beschrieben, eine wesentlich bessere Isolierwirkung auf, so dass die Gesamtstärke der Isolierplatte 2 reduziert werden kann. Durch die Einbettung in der Ausnehmung, die von einem Rahmen umgeben wird, ist sichergestellt, dass die Nägel oder Schrauben der Dämmplattenanker 3, die in die Fugen zwischen zwei benachbarten Feldern eingesetzt werden, die Folie, die das Vakuum sicherstellt, nicht zu durchdringen vermögen. Die Vakuumplatte 4 ist also geschützt. Selbstverständlich könnte auch eine weitere Vakuumplatte bzw. -paneel 4 eingebracht werden, wenn beispielsweise eine seitliche Öffnung in der Dämmplatte 2 eingebracht ist, die in einem taschenförmigen Hohlraum mündet.

Im Fall, dass Dämmplatten 2 verwendet werden, die über Nut und Feder miteinander verbunden sind, können auch von oben zugängliche Hohlräume eingearbeitet sein, die mit einem Vakuumpaneel bestückbar sind. Dies ist beispielsweise auch durch eine zweiteilige Ausbildung der Dämmplatte 2 erreichbar, deren beiden Teile eine Aufnahme bilden, um ein Vakuumpaneel einsetzen zu können. Diese Aufnahme kann dann von einer weiteren Platte verschlossen sein, so dass der Zugang nur von einer gewünschten Seite her zugänglich ist. Auch diese Ausführungsform kann hier zur Anwendung kommen.

Figur 3 zeigt eine Stufenfalzausführung einer Dämmplatte 2, in der ebenfalls ein Vakuumpaneel 4 in eine Aufnahme eingesetzt ist. Eine so beschickte Platte kann ebenfalls mittels der Dämmplattenanker 3 festgenagelt oder -geschraubt werden.

Figur 4 zeigt ein anderes Ausführungsbeispiel, bei dem das Vakuumpaneel 4 in eine Ausnehmung obenseitig eingelegt ist. Auch hier ist der Verbund in gewünschter Weise herstellbar, wie dieser dort angegeben ist. In allen Fällen wird eine höhere Isolationswirkung erzielt. Des Weiteren kann eine Dämmplatte herkömmlicher Art, z. B. aus expandiertem Polystyrol gefertigt, mit dem Vakuumpaneel kombiniert werden.

### Bezugszeichenliste

- 1: Wand
- 2: Dämmplatte / Isolierplatte
- 3: Dämmplattenanker
- 4: Vakuumpaneel / Vakuumplatte

## Patentansprüche

1. Ausbildung und Anordnung von Isolierplatten für Fassaden, Wände, Decken oder Dächer, welche Isolier- oder Dämmplatten mittels Dämmplattenanker annagelbar oder anschraubbar und so ausgebildet sind, dass sie bei durchgehenden Innen- und Außenflächen überlappend, stumpf oder durch Nut-Feder-Verbindungen aneinander stoßend verlegbar sind, und in welche Isolier- oder Dämmplatten mindestens je ein Vakuumpaneel eingebettet ist, **dadurch gekennzeichnet, dass** die Isolier- oder Dämmplatte (2) mindestens eine flächige Aufnahmeausnehmung oder mindestens einen durchgehenden oder taschenförmigen Hohlraum zur Aufnahme des Vakuumpaneels (4) aufweist, wobei die Öffnungsweite der Aufnahme oder des Hohlraums so gewählt ist, dass das Vakuumpaneel (4) mindestens selbsthaltend einschiebbar ist.

2. Ausbildung und Anordnung von Isolier- oder Dämmplatten nach Anspruch 1, **dadurch gekennzeichnet, dass** die Isolier- oder Dämmplatte (2) mit gleichförmigen Platten (2) im Verbund oder Nut-Feder-Verbund verlegbar ist oder eine parallelogrammähnliche Struktur oder eine abgestufte Struktur in der Seitenansicht aufweist und die Platten in Reihe verlegbar sind, wobei die zweite Reihe die erste überlappt.

3. Ausbildung und Anordnung von Isolier- oder Dämmplatten nach Anspruch 1 oder 2, **dadurch gekennzeichnet, dass** in der Ober- und/oder Rückseite der Isolier- oder Dämmplatte (2) jeweils eine Ausnehmung eingearbeitet ist, in die das flächige Vakuumpaneel (4) selbsthaltend eindrückbar oder einklebbar ist.

4. Ausbildung und Anordnung von Isolier- oder Dämmplatten nach Anspruch 1 oder 2, **dadurch gekennzeichnet, dass** mindestens ein schlitzförmiger Hohlraum in der Isolier- oder Dämmplatte (2) vorgesehen ist, in die das Vakuumpaneel (4) einschiebbar ist.

5. Ausbildung und Anordnung von Isolier- oder Dämmplatten nach einem der vorhergehenden Ansprüche, **dadurch ge** - **kennzeichnet,** dass die im Verbund verlegten Isolier-oder Dämmplatten (2) derart seitlich versetzt gegeneinander angeordnet sind, dass die zu den Vakuumpaneelen (4) bestehenden Ränder von den darüber gelegten Isolier- oder Dämmplatten mit Vakuumpaneelen (4) verdeckt sind.

6. Ausbildung und Anordnung von Isolier- oder Dämmplatten nach Anspruch 1, **dadurch gekennzeichnet, dass** die Dämmplattenanker (3) zwischen zwei benachbarten Isolier- oder Dämmplatten eingesetzt und so angeordnet sind, dass sie von der folgenden überlappenden Isolier- oder Dämmplatte (2) überdeckbar sind.

7. Ausbildung und Anordnung von Isolier- oder Dämmplatten nach Anspruch 1, **dadurch gekennzeichnet, dass** die Isolier- oder Dämmplatten aus Zellulose, geschäumtem Kunststoff, wie Polyurethan (PU), expandiertem Polystyrol (PS), verpressbarer Stein- oder Glaswolle, Holzfasern oder aus anderem Werkstoff oder Werkstoffkombinationen bestehen.

8. Ausbildung und Anordnung von Isolier- oder Dämmplatten nach Anspruch 1, **dadurch gekennzeichnet, dass** das Vakuumpaneel aus einer ein- oder mehrschichtigen, mit einer Folie umschlossenen Platte besteht, die aus Zellulose, geschäumtem Kunststoff, wie Polyurethan (PU), expandiertem Polystyrol (PS), verpressbarer Stein- oder Glaswolle, Holzfasern oder aus Kieselerde oder aus anderem Werkstoff oder Werkstoffkombinationen besteht.

9. Ausbildung und Anordnung von Isolier- oder Dämmplatten nach Anspruch 1 oder 6, **dadurch gekennzeichnet, dass** an der Sichtseite der Isolier- oder Dämmplatte (2) Markierungen für die Einbringung der Nägel oder Schrauben der Dämmplattenanker (3) vorgesehen sind.

10. Ausbildung und Anordnung von Isolier- oder Dämmplatten nach Anspruch 1, **dadurch gekennzeichnet, dass** anstelle eines Vakuumpaneel (4) wahlweise die Isolier- oder Dämmplatte (2) mit einer Isolier- oder Dämmplatte gleicher Art oder aus gleichem Material oder einem anderen Material wahlweise am Ort des Verbauens bestückbar ist.
